# NEUE EUROPÄISCHE PATENTSCHRIFT

(11) **EP 1 414 761 B2**
(45) Veröffentlichungstag und Bekanntmachung des Hinweises auf die Entscheidung über den Einspruch: **24.07.2013**
(45) Hinweis auf die Patenterteilung: 08.06.2005
(21) Anmeldenummer: 01953298.5
(22) Anmeldetag: 09.08.2001
(51) Int. Cl.: C03B 27/044, C03B 27/012, C03C 21/00

(54) **VERFAHREN UND VORRICHTUNG ZUR HERSTELLUNG EINER VORGESPANNTEN GLASPLATTE**
METHOD AND DEVICE FOR PRODUCING A TEMPERED GLASS PANE
PROCEDE ET DISPOSITIF DE FABRICATION D'UNE PLAQUE DE VERRE TREMPEE

(43) Veröffentlichungstag der Anmeldung: 06.05.2004
(73) Patentinhaber: INTERVER AG, 6045 Meggen (CH)
(72) Erfinder: SEIDEL, Horst, CH-6318 Walchwil (CH); SCHMALT, Christoph, F., G., CH-3063 Ittigen (CH); HESSELBACH, Georg, F., CH-6045 Meggen (CH)
(74) Vertreter: Sutter, Kurt
(86) Internationale Anmeldenummer: PCT/IB2001/001434
(87) Internationale Veröffentlichungsnummer: WO 2003/014034

(56) Entgegenhaltungen:
- WO-A-96/01792
- DE-C- 602 431
- GB-A- 2 232 414
- US-A- 6 067 820

## Beschreibung

### Technisches Gebiet

Die Erfindung betrifft ein Verfahren zur Herstellung einer vorgespannten Glasplatte, die Anwendung des Verfahrens sowie Vorrichtungen zur Herstellung vorgespannter Glasplatten gemäss den Oberbegriffen der unabhängigen Patentansprüche.

### Stand der Technik

Glasplatten mit druckvorgespannten Aussenflächen kommen bevorzugt dort zum Einsatz, wo erhöhte Anforderungen an die mechanische und/oder thermische Festigkeit bzw. Beanspruchbarkeit der Glasplatten, insbesondere im Brandfalle, gestellt werden bzw. die Verletzungsgefahr im Falle eines Glasbruchs herabgesetzt werden soll. Die Druckvorspannung in den Aussenflächen der Glasplatte bewirkt eine Erhöhung der Schlag- und Biegezugfestigkeit der Glasplatte, was zu einer Erhöhung der mechanischen Festigkeit gegen Bruch und einer Verbesserung der Temperaturwechselfestigkeit führt und die Glasplatte im Falle des Bruchs idealerweise in viele kleine Stücke zerspringen lässt. Insbesondere im Fahrzeugbau, z.B. im Schiffsbau, und in der modernen Architektur, wo Glasscheiben neben den traditionellen Aufgaben, wie thermische und akustische Trennung bestimmter Bereiche ohne optische Entkoppelung derselben, zunehmend auch wichtige feuerschutztechnische Aufgaben wahrnehmen, sind ein- bzw. mehrschichtige Sicherheitsund/oder Feuerschutzgläser aus Glasplatten mit druckvorgespannten Aussenflächen heute nicht mehr wegzudenken.

Das Vorspannen von Glasplatten erfolgt in der Praxis fast ausschliesslich auf chemischem oder thermischen Wege, wobei dem thermischen Vorspannen aus Kostengründen und aus Gründen der Dauerhaftigkeit der Druckvorspannung der Aussenflächen bei der Herstellung von vorgespannten Glasplatten üblicher Dicke für die Verwendung als Sicherheits- bzw. Feuerschutzgläser klar der Vorrang gegeben wird. Beim chemischen Vorspannen unterhalb oder oberhalb der Transformationstemperatur Tg des Glases (Temperatur, bei der das Glas eine Viskosität von etwa 10¹³ dPa s aufweist) wird die Druckspannung in den Aussenflächen der Glasplatte durch Ionenaustausch dieser Flächen mit anderen Stoffen, z.B. mit einer Salzschmelze, erzeugt. Beim thermischen Vorspannvorgang wird die Glasplatte kurzzeitig auf Temperaturen oberhalb der Transformationstemperatur Tg des Glases und oft sogar bis knapp vor den Littleton- oder Erweichungspunkt (Temperatur, bei der das Glas eine Viskosität von 10^{7,6} dPa s aufweist) der verwendeten Glassorte erwärmt und anschliessend rasch abgekühlt, wobei die maximale Aufheiztemperatur, die Abkühlgeschwindigkeit und die Endtemperatur derartig gewählt werden, dass die beiden Aussenflächen der_Glasplatte anschliessend bei Gebrauchstemperatur dauerhaft die gewünschte Druckspannung aufweisen. Je nach Glassorte und gewünschter Vorspannung ist es beispielsweise üblich, die Glasplatte innerhalb von wenigen Minuten in einem Ofen auf eine Temperatur im zuvor erwähnten Bereich aufzuheizen und sodann innerhalb von ein bis zwei Minuten durch Anblasen mit kalter Luft auf Gebrauchstemperatur abzukühlen. Infolge der von aussen wirkenden Kühlung "gefrieren" dabei zuerst die Aussenflächen der Glasplatte, wobei sie sich anfänglich auf Grund der noch geringen Festigkeit des noch wärmeren Glases im Innern der Glasplatte praktisch ohne einen Aufbau von Spannungen zusammenziehen können. Kühlt nun auch das Glas im Inneren der Glasplatte weiter ab, so wird es durch das bereits recht feste Glas der Aussenflächen am Sichzusammenziehen gehindert, was in den Aussenflächen der Glasplatte zu einem Aufbau von Druckspannungen und im Inneren derselben zu einem Aufbau von Zugspannungen führt. Unterschreitet die Temperatur der Glasplatte anschliessend die Transformationstemperatur Tg, so verbleiben die zu diesem Zeitpunkt vorhandenen Spannungen dauerhaft im Glas. Die verwendeten Begriffe wie "Transformationstemperatur Tg", "Littletonpunkt" usw. sind dem Fachmann im Gebiet der Glasverarbeitung geläufig und können bei Bedarf der Fachliteratur (z.B. S. Lohmeyer ..., Werkstoff Glas, Lexika-Verlag 1979, D-Grafenau) entnommen werden. Sie werden deshalb hier nicht näher erläutert.

Neben den eingangs erwähnten Vorteilen weisen einfach vorgespannte Glasscheiben jedoch den Nachteil auf, dass innerhalb einer Charge vorgespannter Glasplatten die Standardabweichung der Biegezugfestigkeiten relativ gross ist und sich Glasplatten mit Inhomogenitäten und/oder Einschlüssen, wie z.B. mit Nickelsulfideinschlüssen, im Brandfall nach kurzer Zeit durch Spontanbruch selbst zerstören. Dieses hat, vor dem Hintergrund der immer strenger werdenden Sicherheitsvorschriften, dazu geführt, dass solche unter Hitzeeinwirkung spontanbruchgefährdeten Scheiben durch zeit- und kostenintensive Verfahren ausgeschieden bzw. verbessert werden müssen, um die in den heutigen Qualifikationsverfahren geforderten Grenzen betreffend die statistische Versagenswahrscheinlichkeit der Scheiben im Brandfalle einhalten zu können.

Ein solches Verfahren ist der sogenannte Heiss-Lagerungs-Test (in Englisch "Heat Soak Test" genannt), welcher im Anschluss an das Vorspannen der Glasscheiben durchgeführt wird und bis heute die wirtschaftlichste Methode zur Ausscheidung von Scheiben mit Einschlüssen und Inhomogenitäten sowie zur Herabsetzung der Standardabweichung der Biegezugfestigkeit innerhalb einer Charge vorgespannter Glasplatten darstellt. Dieser Test ist eine Wärmebehandlung, bei dem die vorgespannten Glasplatten während einer längeren Zeitdauer, typischerweise während mehrerer Stunden, bei einer Temperatur deutlich oberhalb der Gebrauchstemperatur aber unterhalb der Transformationstemperatur Tg des Glases, z.B. im Bereich zwischen 200°C und 300°C, gelagert werden, was ein Wachstum etwaiger Nickelsulfideinschlüsse im Glas und dadurch eine Zerstörung der fehlerhaften Glasplatten durch Spontanbruch bewirkt. Die Versagenswahrscheinlichkeit im Brandfalle der unversehrt aus diesem Test hervorgehenden Glasscheiben ist gering und erfüllt, je nach gewählten Verfahrensparametern, die jeweiligen Vorschriften. Abgesehen von der Tatsache, dass dieser Heiss-Lagerungs-Test viel Energie und Zeit benötigt und sich auf Grund der gegenüber dem Vorspannvorgang sehr langen Prozessdauer nur schwer in einen kontinuierlichen Fertigungsprozess einbinden lässt, wird durch diese nachgeschaltete Wärmebehandlung auch ein Teil der zuvor erzeugten und gewünschten Druckvorspannung in den Aussenflächen der Glasscheibe wieder abgebaut, was sich nachteilig auf die maximale Biegezugfestigkeit und die Temperaturwechselfestigkeit der Scheibe auswirkt.

In WO 96/01792 A1 wird daher ein weiterentwickeltes Verfahren zum Herstellen von druckvorgespannten Glasplatten vorgeschlagen, bei dem die Glasplatten jeweils mehrmals vorgespannt werden und jeweils zwischen zwei Vorspannvorgängen einem Heiss-Lagerungs-Test unterzogen werden. Dieses führt zwar gegenüber dem zuvor beschriebenen Vorgehen zu entsprechenden Glasplatten mit einer höheren Biegezugfestigkeit und einer erhöhten Temperaturwechselfestigkeit, ist aber auch vom Produktionsablauf noch aufwendiger und benötigt zudem noch mehr Zeit und Energie, wodurch sich die Herstellung solcher Glasscheiben weiter verteuert.

### Darstellung der Erfindung

Es stellt sich daher die Aufgabe, ein Verfahren zur Herstellung einer vorgespannten Glasplatte sowie Vorrichtungen zur Herstellung vorgespannter Glasplatten zur Verfügung zu stellen, welche die Nachteile des Standes der Technik nicht aufweisen oder diese zumindest teilweise beheben.

Diese Aufgabe wird durch das Verfahren und die Vorrichtungen gemäss den kennzeichnenden Merkmalen der unabhängigen Patentansprüche gelöst.

Ein erster Aspekt der Erfindung betrifft ein Verfahren zur Herstellung einer vorgespannten Glasplatte mit geringer Versagenswahrscheinlichkeit im Brandfalle, welches mindestens zwei Vorspannvorgänge umfasst. Mindestens einer der Vorspannvorgänge des Verfahrens, welcher auf einen vorausgehenden Vorspannvorgang folgt und anspruchsgemäss als zweiter Vorspannvorgang bezeichnet wird, ist ein thermischer Vorspannvorgang. Der diesem vorausgehenden Vorspannvorgang, welcher sowohl ein chemischer als auch ein thermischer Vorspannvorgang sein kann, wird anspruchsgemäss als erster Vorspannvorgang bezeichnet, wobei es durchaus möglich ist, dass diesem Vorspannvorgang ein oder mehrere Vorspannvorgänge vorausgehen. Erfindungsgemäss wird zwischen diesem anspruchsgemässen ersten Vorspannvorgang und diesem anspruchsgemässen zweiten Vorspannvorgang im Gegensatz zum Stand der Technik keine Wärmebehandlung zur Ausscheidung von fehlerhaften, unter Hitzeeinwirkung spontanbruchgefährdeten Glasplatten durch Spontanbruch derselben während der Wärmebehandlung durchgeführt. Zu solchen Wärmebehandlungen zur Ausscheidung von fehlerhaften, unter Hitzeeinwirkung spontanbruchgefährdeten Glasplatten zählt der eingangs beschriebene Heiss-Lagerungs-Test.

Überraschenderweise hat sich gezeigt, dass sich durch das erneute thermische Vorspannen von zuvor bereits vorgespannten Glasplatten diejenigen dieser Glasplatten, welche unter Hitzeeinwirkung, z.B. im Brandfalle oder in einem Qualifikationstest, potentiell spontanbruchgefährdet sind, durch Selbstzerstörung während dem erneuten, thermischen Vorspannen auch ohne zwischengeschaltete zeit- und kostenintensive Ausscheidungsverfahren sicher ausscheiden lassen. Durch das erfindungsgemässe Verfahren wird es somit möglich, auf kostengünstige Weise und mit sehr kurzen und, falls gewünscht, auch kontinuierlichen Fertigungsprozessen Glasplatten mit geringer Versagenswahrscheinlichkeit im Brandfalle und sehr hoher Biegezugfestigkeit und Temperaturwechselfestigkeit sowie vorteilhaftem Bruchverhalten herzustellen.

In einer bevorzugten Ausführungsform des Verfahrens wird zwischen dem ersten und dem zweiten Vorspannvorgang kein Verfahren zur Ausscheidung von fehlerhaften, unter Hitzeeinwirkung spontanbruchgefährdeten Glasplatten durchgeführt. Solche Ausscheidungsverfahren können auf verschiedenen Prinzipien wie z.B. Optik, Ultraschall und/oder Wärmeanwendung beruhen und können sowohl ein zerstörungsfreies als auch zerstörendes Aussondern von fehlerhaften Glasscheiben ermöglichen.

Bevorzugterweise wird das Verfahren derartig durchgeführt, dass zwischen dem Ende des anspruchsgemässen ersten und dem Beginn des anspruchsgemässen zweiten Vorspannvorgangs weniger als 15 Minuten, bevorzugterweise weniger als 10 Minuten vergehen. Solch kurze Zwischenzeiten werden durch das erfindungsgemässe Verfahren für die Herstellung vorgespannter Glasplatten mit geringer Versagenswahrscheinlichkeit im Brandfalle erst ermöglicht und bergen den Vorteil, dass eine kontinuierliche Fertigung mit kurzen Durchlaufzeiten möglich wird. Auch besteht die Möglichkeit, die Glasscheibe nach dem anspruchsgemässen ersten Vorspannvorgang nicht vollständig auf Umgebungstemperatur abzukühlen, sondern mit einer Temperatur unterhalb der Transformationstemperatur Tg, beispielsweise mit 100°C bis 150°C, dem auf diesen folgenden anspruchsgemässen zweiten Vorspannvorgang zuzuführen, wodurch sich zusätzlich Energie einsparen lässt.

Ist der anspruchsgemässe erste Vorspannvorgang ebenfalls ein thermischer Vorspannvorgang, so werden der anspruchsgemässe erste Vorspannvorgang und der anspruchsgemässe zweite Vorspannvorgang mit Vorteil mit unterschiedlichen Aufheiztemperaturen durchgeführt, wobei es bevorzugt ist, dass die Glasplatte bei dem anspruchsgemässen ersten Vorspannvorgang auf eine niedrigere Temperatur aufgeheizt wird als bei dem anspruchsgemässen zweiten Vorspannvorgang. Auf diese Weise lassen sich der Energieverbrauch beim Herstellungsprozess und die Eigenschaften der mit dem Verfahren hergestellten Glasplatten optimieren. Ebenfalls ist es bevorzugt, dass die Aufheizzeiten der Glasplatte je Vorspannvorgang im wesentlichen gleich sind. Hierdurch können hintereinander geschaltete Vorspanneinheiten im gleichen Arbeitstakt betrieben werden, was einer kontinuierlichen Fertigung förderlich ist.

Des Weiteren ist es, für den Fall, dass der anspruchsgemässe erste Vorspannvorgang ein thermischer Vorspannvorgang ist, bevorzugt, dass der anspruchsgemässe erste Vorspannvorgang und der anspruchsgemässe zweite Vorspannvorgang mit unterschiedlichen Abkühlgeschwindigkeiten durchgeführt werden. Bevorzugterweise wird die Glasplatte beim ersten Vorspannvorgang mit einer geringeren Geschwindigkeit abgekühlt als beim zweiten Vorspannvorgang, was ebenfalls zu einer Verringerung des Energieverbrauch beiträgt und die Eigenschaften der hergestellten Glasplatten optimieren hilft.

In noch einer bevorzugten Ausführungsform des Verfahrens werden der anspruchsgemässe erste Vorspannvorgang, welcher ein chemischer oder thermischer Vorspannvorgang sein kann, und der anspruchsgemässe zweite Vorspannvorgang an unterschiedlichen Orten durchgeführt, wozu zwischen den Vorspannvorgängen ein Transport der Glasplatte über eine grössere Distanz durch die Luft, zu Wasser oder zu Land erforderlich ist. So können beispielsweise grosse Glasplatten direkt nach ihrer Erzeugung, z.B. in der Floatglasfabrik, unter Ausnutzung ihrer beim Verlassen des Kühlofens vorhandenen Restwärme direkt durch einen chemischen oder thermischen Vorspannvorgang vorgespannt werden und sodann als vorgespanntes Glasplattenhalbzeugmaterial verkauft und an den Ort der Weiterverarbeitung transportiert werden, wo sie sodann, gegebenenfalls nach vorherigem Zuschneiden und/oder Kantenbearbeiten, dem darauffolgenden, die fehlerhaften Glasplatten ausscheidenden anspruchsgemässen zweiten Vorspannvorgang unterzogen werden. Hierdurch lassen sich in kürzester Zeit mit sehr geringem Energieaufwand hochvorgespannte Glasplatten mit einer geringen Versagenswahrscheinlichkeit im Brandfalle unter Verwendung einfacher Vorspannanlagen herstellen. Auch lässt sich hierdurch das Transportrisiko für das Glasplattenhalbzeugmaterial deutlich herabsetzen. Um möglichst viel Restwärme ausnutzen zu können, ist es auch denkbar, die Glasplatte im Kühlofen nicht auf die übliche Kühlofenaustrittstemperatur abzukühlen, sondern lediglich auf eine Temperatur direkt unter der Transformationstemperatur Tg des Glases, z.B. bei Kalk-Natron-Glas auf eine Temperatur kleiner als 500°C, und sodann direkt dem Vorspannvorgang zuzuführen.

Sollen Glasplatten mit einer extrem geringen Versagenswahrscheinlichkeit im Brandfalle, aber mit einer geringeren Biegezugfestigkeit hergestellt werden, so ist es von Vorteil, im Anschluss an den anspruchsgemässen zweiten Vorspannvorgang oder an einen letzten Vorspannvorgang eine Wärmebehandlung wie z.B. den Heiss-Lagerungs-Test durchzuführen. Je nach Glassorte und zu erzielenden Versagenswahrscheinlichkeiten werden die Glasplatten hierfür auf eine Temperatur von z.B. oberhalb von 200°C, 250°C oder 300°C aufgeheizt und sodann auf dieser Temperatur für eine Zeitdauer von z.B. mehr als 30 Minuten, mehr als 2 Stunden oder mehr als 5 Stunden gehalten. Je höher die Temperatur und je länger die Zeitdauer, desto grösser ist die Wahrscheinlichkeit, dass etwaige, aus dem anspruchsgemässen zweiten Vorspannvorgang unversehrt hervorgegangene fehlerhafte Glasscheiben durch Spontanbruch derselben ausgesondert werden. Mit zunehmender Temperatur und Behandlungsdauer wird die Vorspannung der Glasplatte abgebaut und die Standardabweichung der Biegezugfestigkeit verkleinert.

In einer weiteren bevorzugten Ausführungsform des Verfahrens werden der anspruchsgemässe erste und der anspruchsgemässe zweite Vorspannvorgang direkt aufeinanderfolgend durchgeführt, d.h. dass zwischen diesen keine weiteren Verfahrensschritte durchgeführt werden und bevorzugterweise auch keine Zwischenlagerung der Glasplatte erfolgt.

In einer anderen bevorzugten Ausführungsform des Verfahrens werden zwischen dem anspruchsgemässen ersten Vorspannvorgang und dem anspruchsgemässen zweiten Vorspannvorgang weitere Verfahrensschritte durchgeführt, und zwar, wenn es die Vorspannung der Glasplatte erlaubt, bevorzugterweise ein Zuschneiden der Glasplatte und/oder ein Bearbeiten der Kanten der Glasplatte, z.B. durch Schleifen der Glasplattenkanten. Ein derartiges Vorgehen ist besonders dann von Vorteil, wenn grosse, bereits einmal chemisch oder thermisch vorgespannte Glasplatten als Glasplattenhalbzeugmaterial, z.B. ab Zwischenlager oder von Zulieferern, bezogen werden und dann durch Zuschnitt und/oder Kantenbearbeitung und anschliessendes thermisches Vorspannen zu preisgünstigen, hochvorgespannten Glasplatten mit geringer Versagenswahrscheinlichkeit im Brandfalle verarbeitet werden, wobei sich der erfindungsgemässe Verfahrensablauf ergibt.

Ebenfalls bevorzugt ist es, zwischen dem anspruchsgemässen ersten Vorspannvorgang und den anspruchsgemässen zweiten Vorspannvorgang eine Beschichtung und/oder Bedruckung der Glasplatte durchzuführen, falls solche Verfahrensschritte gewünscht sind, da sich auf diese Weise das Aufheizen für den anspruchsgemässen zweiten Vorspannvorgang gleichzeitig zum Einbrennen etwaiger Beschichtungen oder Bedruckungen nutzen lässt. Hierdurch kann zusätzlich Energie eingespart werden.

Bevorzugterweise werden Glasplatten aus Alumosilicat-Glas, aus Kalk-Natron-Glas, aus Borosilicat-Glas oder aus Erdalkali-Glas als Ausgangsmaterial verwendet, und zwar bevorzugterweise Platten dieser Glassorten, welche nach dem Float-Verfahren hergestellt worden sind, welches dem Fachmann ein Begriff ist. Solche Glasplatten sind kommerziell erhältlich, günstig im Preis und von guter Qualität.

In noch einer weiteren bevorzugten Ausführung des Verfahrens kommen als Ausgangsmaterial Glasplatten zum Einsatz, welche auf mindestens einer ihrer beiden Aussenflächen eine reliefartige Oberflächenstruktur aufweisen.

Auch ist die Verwendung von Glasplatten als Ausgangsmaterial vorgesehen, welche auf mindestens einer ihrer beiden Aussenflächen ganz oder teilweise mit Emaille- oder Siebdruckfarben bedruckt oder mittels Trägerfolien mit solchen Farben belegt sind. Auf diese Weise lassen sich z.B. Fassadenelemente mit undurchsichtigen Befestigungsbereichen besonders wirtschaftlich herstellen.

Bevorzugt ist zudem die Verwendung von Glasplatten als Ausgangsmaterial, welche auf mindestens einer ihrer beiden Aussenflächen ganz oder teilweise mit einer Beschichtung, bevorzugterweise für den Sonnen- oder Wärmeschutz oder zur Strahlungsreduktion für den Brandschutz, versehen sind.

Bevorzugterweise ist die Beschichtung mindestens oder ausschliesslich im Randbereich der Glasplatte angeordnet, bevorzugterweise als mindestens 10 mm, bevorzugterweise mindestens 5 mm breites, entlang den Begrenzungskanten der Aussenfläche verlaufendes Beschichtungsband.

Ein zweiter Aspekt der Erfindung betrifft die Anwendung des Verfahrens gemäss dem ersten Aspekt der Erfindung zur Herstellung von Brandschutzscheiben und/oder Sicherheitsglasscheiben für Gebäude oder Fahrzeuge, wie z.B. Schiffe, Flugzeuge oder Busse, sowie für die Herstellung von Glasplatten als Ausgangsmaterial für die Herstellung solcher oft mehrschichtiger Glasscheiben.

Ein dritter Aspekt der Erfindung betrifft eine Vorrichtung zur Herstellung vorgespannter Glasplatten mit mindestens zwei thermischen Vorspanneinheiten, welche jeweils einen Ofen zum Aufheizen einer Glasplatte und eine dem Aufheizofen nachgeschaltete Kühlanordnung umfassen und mittels stationärer Transportmittel für den Transport der Glasplatten, wie z.B. Transportbänder oder Anordnungen aus angetriebenen Transportrollen, miteinander verbunden sind, so dass ein automatisiertes mehrfaches Vorspannen derselben Glasplatte im wesentlichen direkt aufeinanderfolgend möglich ist. Die erfindungsgemässe Vorrichtung ermöglicht ein schnelles und kostengünstiges Herstellen vorgespannter Glasplatten, bevorzugterweise nach dem Verfahren gemäss dem ersten Aspekt der Erfindung.

Bevorzugterweise sind mindestens zwei der Vorspanneinheiten der Vorrichtung unabhängig voneinander steuerbar, so dass im wesentlichen direkt hintereinander unterschiedliche Vorspannvorgänge mit derselben Glasplatte durchgeführt werden können, was eine Optimierung des Energieverbrauchs der Vorrichtung und der technischen Eigenschaften der mit der Vorrichtung hergestellten Glasplatte erlaubt.

In einer bevorzugten Ausführungsform der Erfindung sind die Vorspanneinheiten der Vorrichtung in einer Reihe hintereinander angeordnet und die zwischen diesen angeordneten Transportmittel derartig ausgestaltet, dass eine im wesentlichen geradlinige Verschiebung der Glasplatten zwischen den Vorspanneinheiten möglich ist. Eine solche Anordnung begünstigt eine automatisierte Herstellung vorgespannter Glasplatten.

Bevorzugterweise ist zudem zwischen zwei Vorspanneinheiten eine Beschichtungseinheit und/oder eine Bedruckungseinheit angeordnet, wodurch eine Vorrichtung mit grosser Flexibilität bezüglich der herzustellenden Produkte geschaffen wird.

Ein vierter Aspekt der Erfindung betrifft eine Vorrichtung zur Herstellung vorgespannter Glasplatten mit einer thermischen Vorspanneinheit, welche einen Aufheizofen und eine dem Aufheizofen nachgeschaltete Kühlanordnung sowie stationäre Transportmittel für den Transport der Glasplatten aufweist. Die Transportmittel sind derartig ausgestaltet, dass sie ein mehrfaches Beschicken der Vorspanneinheit mit derselben Glasplatte ermöglichen. Diese erfindungsgemässe Vorrichtung ermöglicht ein schnelles und kostengünstiges Herstellen vorgespannter Glasplatten, bevorzugterweise nach dem Verfahren gemäss dem ersten Aspekt der Erfindung, mit nur einer Vorspanneinheit. Durch Ausstatten mit entsprechenden Transportmitteln lassen sich auch existierende Anlagen mit nur einer Vorspanneinheit zu einer erfindungsgemässen Vorrichtung umbauen.

In einer bevorzugten Ausführungsform der Vorrichtung nach dem dritten oder dem vierten Aspekt der Erfindung ist die Vorrichtung derartig ausgestaltet, dass ein direkt aufeinander folgendes Durchführen der Vorspannvorgänge unter im wesentlichen ununterbrochenem Bewegen der Glasplatte möglich ist.

In noch einer bevorzugten Ausführungsform der Vorrichtung nach dem dritten oder dem vierten Aspekt der Erfindung weist die Vorrichtung zusätzlich mindestens eine nachgeschaltete Wärmebehandlungseinheit, z.B. zur Durchführung eines nachgeschalteten Heiss-Lagerungs-Tests, mindestens eine Beschichtungseinheit und/oder mindestens eine Bedruckungseinheit, z.B. für Emaillefarbe, auf, welche Einheiten mit stationären Transportmittel für die Glasplatten mit einer Vorspanneinheit der Vorrichtung verbunden sind, zur Ermöglichung einer automatisierten Wärmebehandlung, Beschichtung und/oder Bedruckung der Glasplatte direkt im Anschluss an das letzte Vorspannen.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 schematisch den Temperatur-ZeitVerlauf eines ersten Verfahrens gemäss dem Stand der Technik;
Fig. 2 schematisch den Temperatur-ZeitVerlauf eines zweiten Verfahrens gemäss dem Stand der Technik;
Fig. 3 schematisch den Temperatur-ZeitVerlauf eines ersten erfindungsgemässen Verfahrens;
Fig. 4 schematisch den Temperatur-ZeitVerlauf eines zweiten erfindungsgemässen Verfahrens;
Fig. 5 schematisch den Temperatur-ZeitVerlauf eines dritten erfindungsgemässen Verfahrens;
Fig. 6 schematisch den Temperatur-ZeitVerlauf eines vierten erfindungsgemässen Verfahrens;
Fig. 7 schematisch eine erfindungsgemässe Vorrichtung mit zwei Vorspanneinheiten; und
Fig. 8 schematisch eine erfindungsgemässe Vorrichtung mit einer einzelnen Vorspanneinheit.

### Wege zur Ausführung der Erfindung

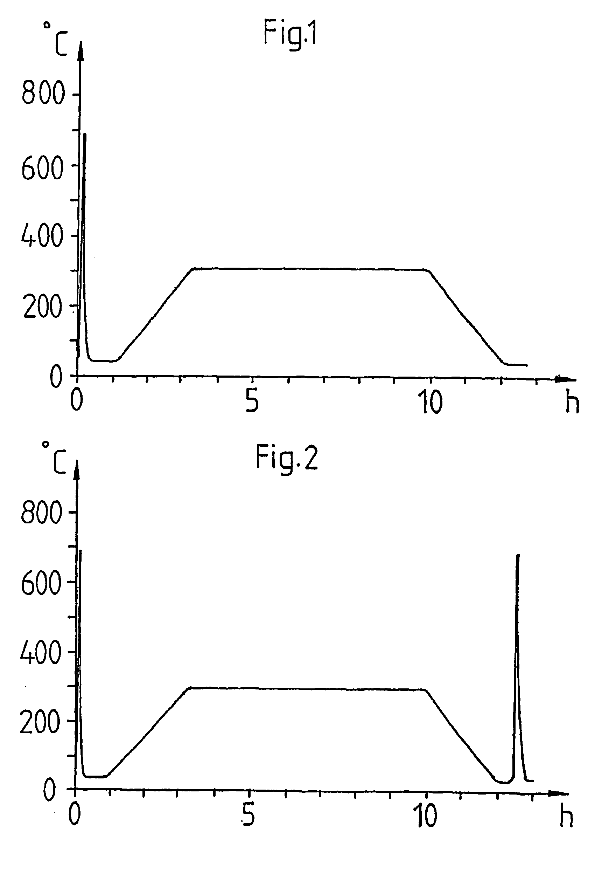

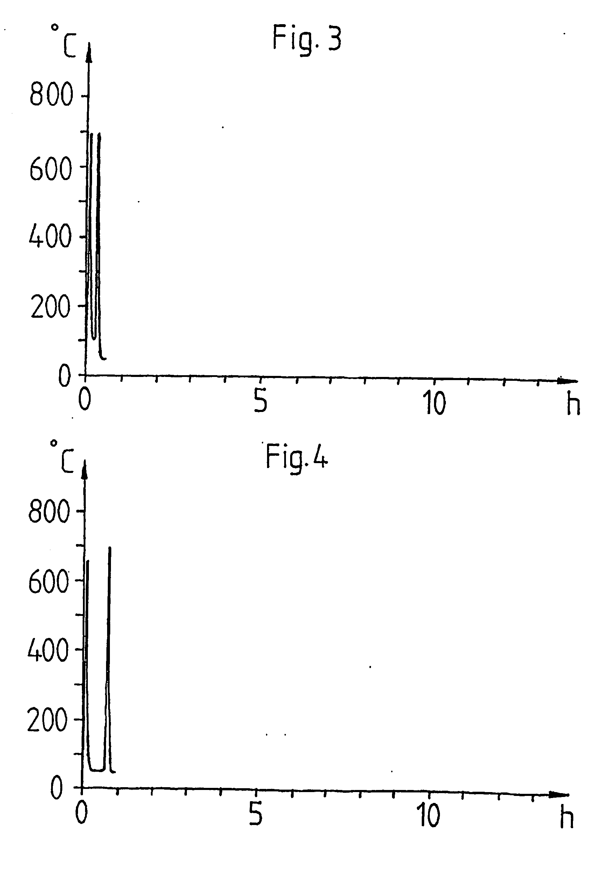

Bevor bevorzugte Wege zur Ausführung der Erfindung anhand der Figuren 3 bis 8 beschrieben werden, werden vorgängig die in den Figuren 1 bis 2 schematisch dargestellten Temperatur-Zeit-Verläufe zweier Verfahren zur Herstellung von vorgespannten Glasplatten mit geringer Versagenswahrscheinlichkeit im Brandfalle gemäss dem Stand der Technik diskutiert.

Fig. 1 zeigt schematisch den Temperatur-ZeitVerlauf bei einem Verfahren gemäss den Stand der Technik, bei dem die Glasplatte lediglich einmal thermisch vorgespannt wird und sodann direkt einem Heiss-Lagerungs-Test unterzogen wird. Wie dem Kurvenverlauf zu entnehmen ist, wird die Glasplatte zum Vorspannen innerhalb von einigen Minuten auf eine Temperatur von etwa 690°C aufgeheizt und sodann innerhalb von ca. 2 Minuten wieder auf Umgebungstemperatur abgekühlt. Anschliessend wird die vorgespannte Glasplatte bei Umgebungstemperatur kurz zwischengelagert, z.B. bis genügend Glasplatten für eine Charge für den Ofen für den Heiss-Lagerungs-Test zur Verfügung stehen. Sodann wird die Glasplatte dem Heiss-Lagerungs-Test unterzogen, wozu sie über einen Zeitraum von etwa 2 Stunden von Umgebungstemperatur auf etwa 300°C aufgeheizt, etwa 7 Stunden auf dieser Temperatur gehalten und anschliessend über ca. 2 Stunden wieder bis auf Umgebungstemperatur abgekühlt wird.

Fig. 2 zeigt schematisch den Temperatur-ZeitVerlauf bei einem Verfahren gemäss dem Stand der Technik, bei dem die Glasplatte zweimal thermisch vorgespannt wird und zwischen den beiden Vorspannvorgängen einem Heiss-Lagerungs-Test unterzogen wird. Der Kurvenverlauf ist für den ersten Vorspannvorgang und den Heiss-Lagerungs-Test identisch mit dem Kurvenverlauf des in Fig. 1 dargestellten Verfahrens. Nach dem Heiss-Lagerungs-Test wird die Glasplatte jedoch ein zweites Mal thermisch vorgespannt, und zwar in identischer Weise wie beim ersten Vorspannvorgang.

Wie den Figuren 1 und 2 zu entnehmen ist, führt die gemäss dem Stand der Technik erforderliche Durchführung der Heiss-Lagerungs-Tests als Teil des Herstellverfahrens zu durchschnittlichen Gesamtverfahrensdauern von mehreren Stunden, während denen zudem auch relativ viel Heizenergie benötigt wird. Auf Grund der stark unterschiedlichen Zeitdauern der Verfahrensschritte "thermisches Vorspannen" und "Heiss-Lagerungs-Test" ist eine kontinuierliche Produktion mit einer Fertigungslinie praktisch nicht möglich, so dass die Verfahren gemäss dem Stand der Technik nur diskontinuierlich durchgeführt werden können. Insbesondere bei dem Verfahren gemäss Fig. 2 ergeben sich zudem sehr ungünstige Produktionsabläufe, da zwei kurze Vorspannvorgänge durch einen im Verhältnis extrem langen Heiss-Lagerungs-Test voneinander getrennt werden.

Fig. 3 zeigt schematisch den Temperatur-ZeitVerlauf bei einem erfindungsgemässen Verfahren, bei dem die Glasplatte zweimal und zwar im wesentlichen direkt hintereinander vorgespannt wird. Wie dem Kurvenverlauf zu entnehmen ist, wird die Glasplatte zum ersten Vorspannen in einem Aufheizofen innerhalb von einigen Minuten auf eine Temperatur von etwa 700°C aufgeheizt und sodann durch Anblasen mit kalter Luft innerhalb von ca. 1-2 Minuten auf etwa 100°C bis 150°C abgekühlt. Anschliessend wird die nun bereits vorgespannte, noch warme Glasplatte für das zweite Vorspannen ein weiters Mal innerhalb von wenigen Minuten in einem Aufheizofen auf etwa 700°C aufgeheizt und sodann wiederum durch Anblasen mit kalter Luft innerhalb von 1-2 Minuten auf Umgebungstemperatur abgekühlt. Die Gesamtprozessdauer liegt bei diesem Verfahren für die üblichen Glasplattendicken deutlich unter 15 Minuten.

Fig. 4 zeigt schematisch den Temperatur-ZeitVerlauf bei einem weiteren erfindungsgemässen Verfahren, bei dem die Glasplatte zwei unterschiedlichen Vorspannvorgängen unterzogen wird. Wie deutlich zu erkennen ist, wird die Glasplatte beim ersten Vorspannvorgang im Aufheizofen innerhalb von einigen Minuten auf etwa 680°C aufgeheizt und sodann durch Anblasen mit kalter Luft in 1 bis 2 Minuten bis auf Umgebungstemperatur abgekühlt. Anschliessend wird die Glasplatte bei Umgebungstemperatur mit Emaillefarbe bedruckt und sodann ein zweites Mal vorgespannt, indem sie in einem Aufheizofen auf etwa 700°C aufgeheizt und sodann durch Anblasen mit kalter Luft innerhalb von 1-2 Minuten auf Umgebungstemperatur abgekühlt wird.

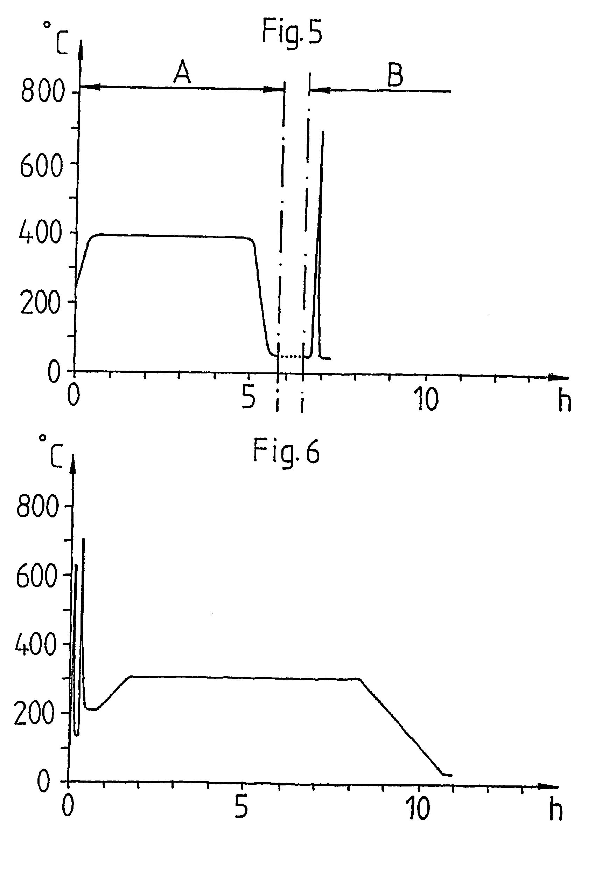

Fig. 5 zeigt schematisch den Temperatur-ZeitVerlauf bei einem erfindungsgemässen Verfahren, bei dem die Glasplatte zweimal vorgespannt wird, das erste Mal chemisch im Herstellwerk und das zweite Mal thermisch am Ort der Weiter- bzw. Fertigverarbeitung. Wie dem Kurvenverlauf im Bereich "A" zu entnehmen ist, wird die noch etwa 250°C warme Glasplatte im Herstellwerk, hier in der Floatglasfabrik, direkt nach ihrer Herstellung zum chemischen Vorspannen in einer Salzschmelze erneut auf etwa 400°C aufgeheizt und während mindestens 2 Stunden, im hier dargestellten Fall während etwa 5 Stunden, in der Schmelze belassen. Anschliessend wird sie auf Umgebungstemperatur abgekühlt. Sodann erfolgt der Transport der Glasplatte als chemisch vorgespanntes Glasplattenhalbzeugmaterial an den Ort der Weiter- bzw. Fertigverarbeitung, gegebenenfalls mit vorübergehender Zwischenlagerung der Glasplatte, was durch einen gepunkteten Kurvenverlauf dargestellt ist. Wie dem Kurvenverlauf im Bereich "B" zu entnehmen ist, wird die Glasplatte anschliessend am Ort der Weiter- bzw. Fertigverarbeitung, gegebenenfalls nach vorherigem Zuschneiden, Kantenbearbeiten, Bedrucken und/oder Beschichten, in einer der zuvor bereits beschriebenen Weisen einem thermischen Vorspannvorgang unterzogen.

Fig. 6 zeigt schematisch den Temperatur-ZeitVerlauf bei einem erfindungsgemässen Verfahren, bei welchem im Anschluss an das in Fig. 4 dargestellte Verfahren ein Heiss-Lagerungs-Test wie in den Figuren 1 und 2 gezeigt durchgeführt wird. Wie dem Kurvenverlauf zu entnehmen ist, wird die Glasplatte in diesem Fall zwischen den beiden Vorspannvorgängen lediglich auf etwa 150°C und zwischen dem zweiten Vorspannvorgang und dem Heiss-Lagerungs-Test lediglich auf etwa 200°C abgekühlt, wodurch sich Heizenergie einsparen lässt.

Die zuvor beschriebenen schematischen Temperatur-Zeit-Verläufe betreffen Verfahren zum Vorspannen von etwa 6 mm dicken Floatglasplatten aus Kalk-Natron-Glas. Mit zunehmender bzw. abnehmender Plattendicke nehmen typischerweise auch die Aufheiz- und Abkühlzeiten für die thermischen Vorspannvorgänge zu bzw. ab. Werden Platten aus anderen Glassorten verwendet, so kommen typischerweise auch andere Aufheiztemperaturen und/oder Abkühlzeiten zur Anwendung. Auch sollte beachtet werden, dass aus Gründen des verwendeten Massstabes der Zeitachsen und der zeichnerischen Genauigkeit die Vorspannvorgänge in den Temperatur-Zeit-Verläufen zu lang erscheinen.

Wie den Figuren zu entnehmen ist, können mit dem erfindungsgemässen Verfahren im Gegensatz zum Stand der Technik mit sehr wenig Heizenergie innert weniger Minuten vorgespannte Glasplatten mit geringer Versagenswahrscheinlichkeit im Brandfalle hergestellt werden. Wird anschliessend noch ein traditioneller Heiss-Lagerungs-Test durchgeführt, wie dies in Fig. 6 dargestellt ist, so ergeben sich Glasplatten mit bisher unerreicht geringer Versagenswahrscheinlichkeit im Brandfalle. Auch wenn in diesem Fall die Gesamtverfahrensdauer, wie beim Stand der Technik, im Durchschnitt mehrere Stunden beträgt, so ergibt sich hierbei der Vorteil, dass fertige hochvorgespannte Glasplatten mit geringer Versagenswahrscheinlichkeit im Brandfalle in wenigen Minuten hergestellt werden können und sodann auf Wunsch und ohne Unterbrechung des Vorspannprozesses durch den Heiss-Lagerungs-Test "veredelt" werden können.

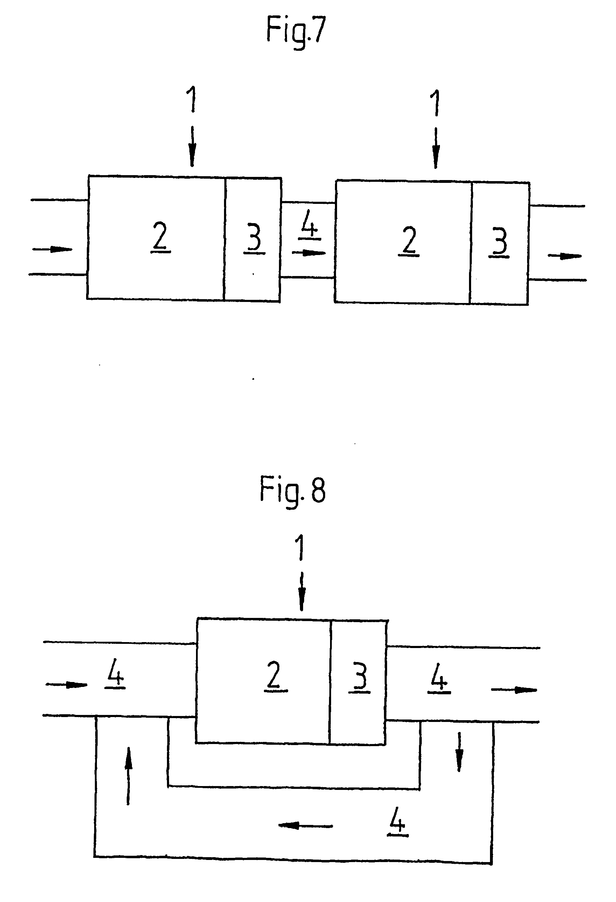

Die Figuren 7 und 8 zeigen schematische Draufsichten auf je eine erfindungsgemässe Vorrichtung zur Herstellung vorgespannter Glasplatten mit geringer Versagenswahrscheinlichkeit im Brandfalle.

Die in Fig. 7 dargestellte Vorrichtung verfügt über zwei getrennt voneinander steuerbare thermische Vorspanneinheiten 1, welche jeweils aus einem Ofen 2 und einer dem Ofen 2 nachgeschalteten Kühlanordnung 3 mit Luftdüsen zum Anblasen der heissen Glasplatte mit kalter Luft bestehen. Die beiden Vorspanneinheiten 1 sind in einer Reihe hintereinander angeordnet und mit einem stationären Transporttisch 4 mit angetriebenen Transportrollen miteinander verbunden, welcher eine geradlinige, horizontale Verschiebung einer Glasplatte in Richtung der Pfeile in kurzer Zeit vom Austritt der ersten Vorspanneinheit 1 zum Eintritt der zweiten Vorspanneinheit 1 ermöglicht.

Die in Fig. 8 dargestellte Vorrichtung verfügt über genau eine thermische Vorspanneinheit 1, welche ebenfalls aus einem Ofen 2 und einer dem Ofen 2 nachgeschalteten Kühlanordnung 3 mit Luftdüsen zum Anblasen der heissen Glasplatte mit kalter Luft besteht. Zwischen dem Austritt und dem Eintritt der Vorspanneinheit 1 ist eine stationäre Rückführeinheit 4 aus mehreren stationären Transporttischen mit angetriebenen Transportrollen angeordnet, welche, falls gewünscht, eine Rückführung einer aus der Vorspanneinheit 1 austretenden Glasplatte und deren erneute Zuführung in die Vorspanneinheit 1 ermöglicht.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise, z.B. durch eine Kombination der hier beispielhaft beschriebenen Verfahrensschritte untereinander oder mit anderen Verfahrensschritten, innerhalb des Umfangs der folgenden Ansprüche ausgeführt werden kann.

## Patentansprüche

1. Verfahren zur Herstellung einer vorgespannten Glasplatte, wobei das Verfahren mindestens einen ersten und einen zweiten Vorspannvorgang umfasst und wobei der zweite Vorspannvorgang, welcher auf den ersten Vorspannvorgang folgt, ein thermischer Vorspannvorgang ist, **dadurch gekennzeichnet, dass** zwischen dem ersten und dem zweiten Vorspannvorgang keine Wärmebehandlung zur Ausscheidung von fehlerhaften, unter Hitzeeinwirkung spontanbruchgefährdeten Glasplatten durchgeführt wird.

2. Verfahren nach Anspruch 1, **dadurch gekennzeichnet, dass** zwischen dem ersten und dem zweiten Vorspannvorgang kein Verfahrensschritt zur Ausscheidung von fehlerhaften, unter Hitzeeinwirkung spontanbruchgefährdeten Glasplatten durchgeführt wird.

3. Verfahren nach einem der vorangehenden Ansprüche, **dadurch gekennzeichnet, dass** das Verfahren genau zwei Vorspannvorgänge umfasst.

4. Verfahren nach einem der vorangehenden Ansprüche, **dadurch gekennzeichnet, dass** zwischen dem Beenden des ersten Vorspannvorgangs und dem Beginnen des zweiten Vorspannvorgangs weniger als 15 Minuten, insbesondere weniger als 10 Minuten vergehen.

5. Verfahren nach einem der vorangehenden Ansprüche, **dadurch gekennzeichnet, dass** die Glasplatte während des gesamten Verfahrens im wesentlichen ununterbrochen bewegt wird.

6. Verfahren nach einem der vorangehenden Ansprüche, **dadurch gekennzeichnet, dass** der erste Vorspannvorgang ein chemischer Vorspannvorgang ist.

7. Verfahren nach einem der Ansprüche 1 bis 5, **dadurch gekennzeichnet, dass** der erste Vorspannvorgang ein thermischer Vorspannvorgang ist.

8. Verfahren nach Anspruch 7, **dadurch gekennzeichnet, dass** der erste und der zweite Vorspannvorgang mit unterschiedlichen Aufheiztemperaturen durchgeführt werden, und insbesondere, dass die Glasplatte beim ersten Vorspannvorgang auf eine niedrigere Temperatur aufgeheizt wird als beim zweiten Vorspannvorgang, und insbesondere, dass die Aufheizzeiten der Glasplatte je Vorspannvorgang im wesentlichen gleich sind.

9. Verfahren nach einem der Ansprüche 7 bis 8, **dadurch gekennzeichnet, dass** der erste und der zweite Vorspannvorgang mit unterschiedlichen Abkühlgeschwindigkeiten durchgeführt werden, und insbesondere, dass die Glasplatte beim ersten Vorspannvorgang mit einer geringeren Geschwindigkeit abgekühlt wird als beim zweiten Vorspannvorgang.

10. Verfahren nach einem der vorangehenden Ansprüche, **dadurch gekennzeichnet, dass** der erste Vorspannvorgang und der zweite Vorspannvorgang an unterschiedlichen Orten durchgeführt werden und zwischen diesen Vorspannvorgängen ein Transport der Glasplatte mittels Flugzeug, Schiff, Bahn und/oder Strassenfahrzeug vom Ort der Durchführung des ersten Vorspannvorgangs zum Ort der Durchführung des zweiten Vorspannvorgangs durchgeführt wird.

11. Verfahren nach einem der vorangehenden Ansprüche, **dadurch gekennzeichnet, dass** vorgängig zum ersten Vorspannvorgang oder nachfolgend auf den zweiten oder einen letzten Vorspannvorgang eine Wärmebehandlung zur Veränderung der Glasstruktur und/oder Spannungsverteilung im Glas durchgeführt wird.

12. Verfahren nach Anspruch 11, **dadurch gekennzeichnet, dass** die Wärmebehandlung oberhalb einer Glastemperatur von 200°C, insbesondere 250°C, und insbesondere 300°C durchgeführt wird.

13. Verfahren nach einem der Ansprüche 11 bis 12, **dadurch gekennzeichnet, dass** die Wärmebehandlung über eine Zeitdauer von mehr als 30 Minuten, insbesondere mehr als 2 Stunden, und insbesondere mehr als 5 Stunden durchgeführt wird.

14. Verfahren nach einem der vorangehenden Ansprüche, **dadurch gekennzeichnet, dass** der erste Vorspannvorgang und der zweite Vorspannvorgang direkt aufeinanderfolgend durchgeführt werden.

15. Verfahren nach einem der Ansprüche 1 bis 13, **dadurch gekennzeichnet, dass** zwischen dem ersten Vorspannvorgang und dem zweiten Vorspannvorgang weitere Verfahrensschritte durchgeführt werden.

16. Verfahren nach Anspruch 15, **dadurch gekennzeichnet, dass** zwischen dem ersten und dem zweiten Vorspannvorgang ein Zuschneiden der Glasplatte und/oder eine Kantenbearbeitung an der Glasplatte durchgeführt wird.

17. Verfahren nach einem der Ansprüche 15 bis 16, **dadurch gekennzeichnet, dass** zwischen dem ersten und dem zweiten Vorspannvorgang eine Beschichtung und/oder Bedruckung der Glasplatte durchgeführt wird.

18. Verfahren nach einem der vorangehenden Ansprüche, **dadurch gekennzeichnet, dass** als Ausgangsmaterial eine Glasplatte aus Alumosilicat-Glas, aus Kalk-Natron-Glas, aus Borosilicat-Glas oder aus Erdalkali-Glas verwendet wird, und insbesondere, dass als Ausgangsmaterial eine Floatglasplatte verwendet wird.

19. Verfahren nach einem der vorangehenden Ansprüche, **dadurch gekennzeichnet, dass** als Ausgangsmaterial eine Glasplatte verwendet wird, welche auf mindestens einer ihrer beiden Aussenflächen eine reliefartige Oberflächenstruktur aufweist.

20. Verfahren nach einem der vorangehenden Ansprüche, **dadurch gekennzeichnet, dass** als Ausgangsmaterial eine Glasplatte verwendet wird, welche auf mindestens einer ihrer beiden Aussenflächen ganz oder teilweise mit Emaille- oder Siebdruckfarben bedruckt oder mittels Trägerfolien mit solchen Farben belegt ist.

21. Verfahren nach einem der vorangehenden Ansprüche, **dadurch gekennzeichnet, dass** als Ausgangsmaterial eine Glasplatte verwendet wird, welche auf mindestens einer ihrer beiden Aussenflächen ganz oder teilweise mit einer Beschichtung, insbesondere für den Sonnen- oder Wärmeschutz oder zur Strahlungsreduktion für den Brandschutz, versehen ist.

22. Verfahren nach Anspruch 21, **dadurch gekennzeichnet, dass** die Beschichtung mindestens oder ausschliesslich im Randbereich der Glasplatte angeordnet ist, insbesondere als mindestens 10 mm, insbesondere mindestens 5 mm breites, entlang den Begrenzungskanten einer Aussenfläche verlaufendes Beschichtungsband.

23. Anwendung des Verfahrens nach einem der vorangehenden Ansprüche zur Herstellung von Brandschutzund/oder Sicherheitsglasscheiben für Gebäude und/oder Fahrzeuge oder zur Herstellung von Glasplatten als Ausgangsmaterial für die Herstellung solcher Glasscheiben.

24. Vorrichtung zur Herstellung vorgespannter Glasplatten, insbesondere zur Durchführung des Verfahrens nach einem der Ansprüche 1 bis 22, **dadurch gekennzeichnet, dass** die Vorrichtung mindestens zwei thermische Vorspanneinheiten (1) aufweist, welche jeweils einen Aufheizofen (2) und eine dem Aufheizofen (2) nachgeschaltete Kühlanordnung (3) umfassen und mittels stationärer Transportmittel (4) für den Transport der Glasplatten untereinander verbunden sind, zur Ermöglichung einer im wesentlichen direkt aufeinander folgenden Durchführung mehrerer Vorspannvorgänge mit derselben Glasplatte.

25. Vorrichtung nach Anspruch 24, **dadurch gekennzeichnet, dass** mindestens zwei der Vorspanneinheiten (1) unabhängig voneinander steuerbar sind zur Ermöglichung einer im wesentlichen direkt aufeinander folgenden Durchführung von unterschiedlichen Vorspannvorgängen mit derselben Glasplatte.

26. Vorrichtung nach einem der Ansprüche 24 bis 25, **dadurch gekennzeichnet, dass** die Vorspanneinheiten (1) in einer Reihe hintereinander angeordnet sind und die stationären Transportmittel (4) derartig ausgestaltet sind, dass diese eine im wesentlichen geradlinige Verschiebung der Glasplatten zwischen den Vorspanneinheiten (1) bewirken können.

27. Vorrichtung nach einem der Ansprüche 24 bis 26, **dadurch gekennzeichnet, dass** die Vorrichtung angeordnet zwischen zwei Vorspanneinheiten (1) eine Beschichtungseinheit und/oder eine Bedruckungseinheit aufweist.

28. Vorrichtung, insbesondere zur Durchführung des Verfahrens nach einem der Ansprüche 1 bis 22, **dadurch gekennzeichnet, dass** die Vorrichtung eine thermische Vorspanneinheit (1) umfassend einen Aufheizofen (2) und eine dem Aufheizofen (2) nachgeschaltete Kühlanordnung (3) sowie stationäre Transportmittel (4) für den Transport der Glasplatten aufweist, welche Transportmittel (4) derartig ausgestaltet sind, dass sie ein mehrfaches Beschicken der Vorspanneinheit (1) mit derselben Glasplatte ermöglichen.

29. Vorrichtung nach einem der Ansprüche 24 bis 29, **dadurch gekennzeichnet, dass** die Vorrichtung derartig ausgestaltet ist, dass ein im wesentlichen direkt aufeinander folgendes Durchführen der Vorspannvorgänge, insbesondere unter einem im wesentlichen ununterbrochenen Bewegen der Glasplatte erfolgen kann.

30. Vorrichtung nach einem der Ansprüche 24 bis 30, **dadurch gekennzeichnet, dass** die Vorrichtung zusätzlich mindestens eine nachgeschaltete Wärmebehandlungseinheit, Beschichtungseinheit und/oder Bedruckungseinheit aufweist, welche mittels stationärer Transportmittel (4) für die Glasplatten mit einer Vorspanneinheit (1) der Vorrichtung verbunden ist, zur Ermöglichung einer Wärmebehandlung, Beschichtung und/oder Bedruckung der Glasplatte direkt im Anschluss an das Vorspannen.

## Claims

1. Method for producing a tempered glass pane, wherein the method comprises at least one first and one second tempering process and wherein the second tempering process, which follows the first tempering process, is a thermal tempering process, **characterised in that** between the first and the second tempering process, no heat treatment for a segregation of defective glass panes, which under influence of heat are at risk to spontaneously break, is performed.

2. Method according to claim 1, **characterised in that** between the first and the second tempering process, no method step for a segregation of defective glass panes, which under influence of heat are at risk to spontaneously break, is performed.

3. Method according to one of the preceding claims, **characterised in that** the method comprises exactly two tempering processes.

4. Method according to one of the preceding claims, **characterised in that** between the termination of the first tempering process and the beginning of the second tempering process, less than 15 minutes, in particular less than 10 minutes pass.

5. Method according to one of the preceding claims, **characterised in that** the glass pane, during the entire process, is essentially moved without interruption.

6. Method according to one of the preceding claims, **characterised in that** the first tempering process is a chemical tempering process.

7. Method according to one of the claims 1 to 5, **characterised in that** the first tempering process is a thermal tempering process.

8. Method according to claim 7, **characterised in that** the first and the second tempering process are performed with different heating up temperatures, and in particular that the glass pane is heated up during the first tempering process to a lower temperature than during the second tempering process, and in particular that the heating up times of the glass pane are essentially the same in each tempering process.

9. Method according to one of the claims 7 to 8, **characterised in that** the first and the second tempering process are performed with different cooling speeds, and in particular that the glass pane is cooled at the first tempering process with a lower speed than at the second tempering process.

10. Method according to one of the preceding claims, **characterised in that** the first tempering process and the second tempering process are performed at different locations and that between the two tempering processes, a transportion of the glass pane by aircraft, boat, railroad and/or road vehicle from the location of the execution at the first tempering process to the location of the execution of the second tempering process is performed.

11. Method according to one of the preceding claims, **characterised in that**, antecedent to the first tempering process or following the second or a last tempering process, a heat treatment for a changing of the glass structure and/or of the distribution of stresses in the glass is performed.

12. Method according to claim 11, **characterised in that** the heat treatment is performed above a glass temperature of 200°C, in particular 250°C and in particular 300°C.

13. Method according to one of the claims 11 to 12, **characterised in that** the heat treatment is performed during a time span of more than 30 minutes, in particular more than 2 hours, and in particular more than 5 hours.

14. Method according to one of the preceding claims, **characterised in that** the first tempering process and the second tempering process are performed directly one after another.

15. Method according to one of the claims 1 to 13, **characterised in that** between the first tempering process and the second tempering process, further method steps are performed.

16. Method according to claim 15, **characterised in that** between the first and the second tempering process, a cutting to size of the glass pane and/or a working of the edges is performed at the glass pane.

17. Method according to one of the claims 15 to 16, **characterised in that** between the first and the second tempering process, a coating and/or printing of the glass pane is performed.

18. Method according to one of the preceding claims, **characterised in that** as base material a glass pane of aluminio-silicate glass, of lime-soda glass, of borosilicate glass or of alkaline earth glass is used, and in particular that a floatglass pane is used as base material.

19. Method according to one of the preceding claims, **characterised in that** a glass pane is used as base material, which comprises a relief-like surface structure on at least one of its two outer surfaces.

20. Method according to one of the preceding claims, **characterised in that** as base material a glass pane is used, which is, on at least one of its two outer surfaces, completely or partly printed with enamel or screen printing colours or is clad by backing films with such colours.

21. Method according to one of the preceding claims, **characterised in that** a glass pane is used as base material, which, on at least one of its two outer surfaces, is completely or partly furnished with a coating, in particular for the protection against sun or heat or for the reduction of radiation for the fire protection.

22. Method according to claim 21, **characterised in that** the coating is located at least or exclusively in the edge area of the glass pane, in particular as a coating strip of a width of at least 10 mm, in particular at least 5 mm, which extends along the border edges of an outer surface.

23. Application of the method according to one of the preceding claims for the production of fire protection and/or safety glass panes for buildings and/or vehicles or for the production of glass panes as base material for the production of such glass panes.

24. Apparatus for the production of tempered glass panes, in particular for performing the method according to one of the claims 1 to 22, **characterised in that** the apparatus comprises at least two thermal tempering units (1), which each include a heating furnace (2) and a cooling arrangement (3) downstream of the heating furnace (2), and which are interconnected with each other by means of stationary transporting means (4) for the transportation of the glass panes, for allowing an essentially directly subsequent executing of several tempering processes with the same glass pane.

25. Apparatus according to claim 24, **characterised in that** at least two of the tempering units (1) are independently controllable from each other for allowing an essentially directly subsequent executing of different tempering processes with the same glass pane.

26. Apparatus according to one of the claims 24 to 25, **characterised in that** the tempering units (1) are arranged in a row one after another and the stationary transporting means (4) are designed in such a manner that they can effect a substantially linear displacement of the glass panes between the tempering units (1).

27. Apparatus according to one of the claims 24 to 26, **characterised in that** the apparatus comprises a coating unit and/or a printing unit located between two tempering units (1).

28. Apparatus, in particular for performing the method according to one of the claims 1 to 22, **characterised in that** the apparatus comprises a thermal tempering unit (1) including a heating furnace (2) and a cooling arrangement (3) located downstream of the heating furnace (2), as well as stationary transporting means (4) for the transportation of the glass panes, which transporting means (4) are designed in such a manner that they allow a multiple charging of the tempering unit (1) with the same glass pane.

29. Apparatus according to one of the claims 24 to 28, **characterised in that** the apparatus is designed in such a manner that an essentially directly subsequent executing of the tempering processes, in particular at an essentially continuous moving of the glass pane, can take place.

30. Apparatus according to one of the claims 24 to 29, **characterised in that** the apparatus additionally comprises at least one subsequent heat treatment unit, coating unit and/or printing unit, which is connected to a tempering unit (1) of the apparatus by means of stationary transporting means for the glass panes in order to allow a heat treatment, coating and/or printing of the glass pane directly following the tempering.

## Revendications

1. Procédé de fabrication d'une plaque de verre trempé, le procédé comprenant au moins une première opération et une deuxième opération de trempe et la deuxième opération de trempe qui suit la première opération de trempe étant une opération de trempe thermique, **caractérisé en ce que** l'on n'effectue pas, entre la première et la deuxième opérations de trempe, de traitement thermique pour l'élimination de plaques de verre défectueuses sujettes à se rompre spontanément sous l'effet de la chaleur.

2. Procédé suivant la revendication 1, **caractérisé en ce que** l'on n'effectue pas, entre la première et la deuxième opérations de trempe, de stades de procédé pour l'élimination de plaques de verre défectueuses sujettes à se rompre spontanément sous l'effet de la chaleur.

3. Procédé suivant l'une des revendications précédentes, **caractérisé en ce que** le procédé comprend exactement deux opérations de trempe.

4. Procédé suivant l'une des revendications précédentes, **caractérisé en ce qu'**il s'écoule entre la fin de la première opération de trempe et le début de la deuxième opération de trempe moins de 15 minutes, notamment moins de 10 minutes.

5. Procédé suivant l'une des revendications précédentes, **caractérisé en ce qu'**on déplace la plaque de verre pendant tout le procédé d'une manière sensiblement ininterrompue.

6. Procédé suivant l'une des revendications précédentes, **caractérisé en ce que** la première opération de trempe est une opération de trempe chimique.

7. Procédé suivant l'une des revendications 1 à 5, **caractérisé en ce que** la première opération de trempe est une opération de trempe thermique.

8. Procédé suivant la revendication 7, **caractérisé en ce que** l'on effectue la première et la deuxième opérations de trempe à des températures de chauffage différentes et notamment **en ce que** l'on porte la plaque de verre dans la première opération de trempe à une température plus basse que dans la deuxième opération de trempe et notamment **en ce que** les durées de chauffage de la plaque de verre sont sensiblement les mêmes pour chaque opération de trempe.

9. Procédé suivant l'une des revendications 7 à 8, **caractérisé en ce que** l'on effectue la première et la deuxième opérations de trempe à des vitesses de refroidissement différentes et notamment **en ce que** l'on refroidit la plaque de verre dans la première opération de trempe à une vitesse plus petite que dans la deuxième opération de trempe.

10. Procédé suivant l'une des revendications précédentes, **caractérisé en ce que** l'on effectue la première opération de trempe et la deuxième opération de trempe en des lieux différents et **en ce que** l'on effectue entre ces opérations de trempe un transport de la plaque de verre par avion, par bateau, par chemin de fer et/ou par véhicule routier du lieu où s'effectue la première opération de trempe au lieu où s'effectue la deuxième opération de trempe.

11. Procédé suivant l'une des revendications précédentes, **caractérisé en ce qu'**avant la première opération de trempe ou après la deuxième opération ou une dernière opération de trempe, on effectue un traitement thermique de modification de la structure du verre et/ou de la répartition des contraintes dans le verre.

12. Procédé suivant la revendication 11, **caractérisé en ce que** l'on effectue le traitement thermique au-dessus d'une température du verre de 200°C, notamment de 250°C et notamment de 300°C.

13. Procédé suivant l'une des revendications 11 à 12, **caractérisé en ce que** l'on effectue le traitement thermique pendant une durée de plus de 30 minutes, notamment de plus de 2 heures et notamment de plus de 5 heures.

14. Procédé suivant l'une des revendications précédentes, **caractérisé en ce que** l'on effectue la première opération de trempe et la deuxième opération de trempe en succession directe.

15. Procédé suivant l'une des revendications 1 à 13, **caractérisé en ce que** l'on effectue entre la première opération de trempe et la deuxième opération de trempe d'autres stades de procédé.

16. Procédé suivant la revendication 15, **caractérisé en ce que** l'on effectue entre la première opération de trempe et la deuxième opération de trempe une découpe de la plaque de verre et/ou un usinage de bord de la plaque de verre.

17. Procédé suivant l'une des revendications 15 à 16, **caractérisé en ce que** l'on effectue entre la première et la deuxième opérations de trempe un revêtement et/ou une impression sur la plaque de verre.

18. Procédé suivant l'une des revendications précédentes, **caractérisé en ce que** l'on utilise comme matière première une plaque de verre en verre à l'aluminosilicate, en verre à base de soude et de chaux, en verre au borosilicate ou en verre au métal alcalino-terreux et notamment **en ce qu'**on utilise comme matière première une plaque de verre flottant.

19. Procédé suivant l'une des revendications précédentes, **caractérisé en ce que** l'on utilise comme matière première une plaque de verre qui a une structure superficielle de type en relief au moins sur l'une de ses deux faces extérieures.

20. Procédé suivant l'une des revendications précédentes, **caractérisé en ce que** l'on utilise comme matière première une plaque de verre qui est imprimée au moins sur l'une de ses deux faces extérieures en tout ou partie en couleur par émaillage ou par sérigraphie ou qui est recouverte au moyen de feuilles supports de couleurs de ce genre.

21. Procédé suivant l'une des revendications précédentes, **caractérisé en ce que** l'on utilise comme matière première une plaque de verre qui est munie au moins sur l'une de ses deux faces extérieures en tout ou partie d'un revêtement, notamment pour la protection vis-à-vis du soleil ou de la chaleur ou pour la réduction du rayonnement en vue d'une protection vis-à-vis de l'incendie.

22. Procédé suivant la revendication 21, **caractérisé en ce que** le revêtement est disposé au moins ou exclusivement dans la partie de bord de la plaque de verre, notamment sous la forme d'une bande de revêtement s'étendant sur moins de 10 mm, notamment sur moins de 5 mm, de large, le long des bords de démarcation d'une face extérieure.

23. Utilisation du procédé suivant l'une des revendications précédentes pour la fabrication de vitres de protection vis-à-vis de l'incendie et/ou de vitres de sécurité pour des bâtiments et/ou des véhicules automobiles ou pour la fabrication de plaques de verre en tant que matière première pour la fabrication de vitres de ce genre.

24. Dispositif de fabrication de plaques de verre trempé, notamment pour la mise en oeuvre du procédé suivant l'une des revendications 1 à 22, **caractérisé en ce que** le dispositif comprend au moins deux unités (1) de trempe thermique qui comprennent, respectivement, un four (2) de chauffage et un dispositif (3) de refroidissement monté en aval du four (2) de chauffage et qui sont reliées entre elles à l'aide de moyens (4) de transport fixes des plaques de verre pour permettre d'effectuer plusieurs opérations de trempe sur la même plaque de verre, qui se succèdent sensiblement directement.

25. Dispositif suivant la revendication 24, **caractérisé en ce qu'**au moins deux des unités (1) de trempe peuvent être commandées indépendamment l'une de l'autre pour permettre d'effectuer des opérations de trempe différentes sur la même plaque de verre, qui se succèdent sensiblement directement.

26. Dispositif suivant l'une des revendications 24 à 25, **caractérisé en ce que** les unités (1) de trempe sont disposées en série l'une derrière l'autre et les moyens (4) fixes de transport sont tels qu'ils peuvent provoquer un déplacement sensiblement rectiligne des plaques de verre entre les unités (1) de trempe.

27. Dispositif suivant l'une des revendications 24 à 26, **caractérisé en ce que** le dispositif disposé entre deux unités (1) de trempe a une unité de revêtement et/ou une unité d'impression.

28. Dispositif, notamment pour la mise en oeuvre du procédé suivant l'une des revendications 1 à 22, **caractérisé en ce que** le dispositif a une unité (1) de trempe thermique comprenant un four (2) de chauffage et un dispositif (3) de refroidissement monté en aval du four (2) de chauffage, ainsi que des moyens (4) fixes de transport des plaques de verre, ces moyens (4) de transport étant tels qu'ils permettent de charger plusieurs fois l'unité (1) de trempe de la même plaque de verre.

29. Dispositif suivant l'une des revendications 24 à 28, **caractérisé en ce que** le dispositif est tel qu'il est possible d'effectuer sensiblement directement à la suite les opérations de trempe, notamment avec un déplacement sensiblement ininterrompu de la plaque de verre.

30. Dispositif suivant l'une des revendications 24 à 29, **caractérisé en ce que** le dispositif comporte, en outre, au moins une unité de traitement thermique, une unité de revêtement et/ou une unité d'impression en aval, les moyens (4) fixes de transport des plaques de verre étant reliés à une unité (1) de trempe du dispositif pour permettre un traitement thermique, un revêtement et/ou une impression de la plaque de verre directement à la suite de la trempe.
